# FASCICULE DE BREVET EUROPEEN

(11) **EP 2 855 815 B1**
(45) Date de publication et mention de la délivrance du brevet: **20.07.2016**
(21) Numéro de dépôt: 13724607.0
(22) Date de dépôt: 24.05.2013
(51) Int. Cl.: E06B 3/66, E06B 3/663, E06B 3/677

(54) **PANNEAU DE VITRAGE COMPRENANT DES FEUILLES DE VERRE ASSOCIÉES ENSEMBLE PAR L'INTERMÉDIAIRE D'ESPACEURS ET PROCÉDÉ DE FABRICATION CORRESPONDANTS**
VERGLASUNG MIT ÜBER ABSTANDSHALTER MITEINANDER VERBUNDENEN GLASSCHEIBEN UND ZUGEHÖRIGES HERSTELLUNGSVERFAHREN
GLAZING PANEL COMPRISING GLASS SHEETS LINKED TOGETHER VIA SPACERS AND CORRESPONDING PRODUCTION METHOD

(30) Priorité: 25.05.2012 BE 201200357
(43) Date de publication de la demande: 08.04.2015
(73) Titulaire: AGC Glass Europe, 1348 Louvain-La-Neuve (BE)
(72) Inventeur: BOUESNARD, Olivier, B-1460 Ittre (BE); CLOSSET, François, B-4900 Spa (BE); DREUX, Priscille, F-59880 Saint Saulve (FR)
(74) Mandataire: Chabou, Samia
(86) Numéro de dépôt international: PCT/EP2013/060779
(87) Numéro de publication internationale: WO 2013/174994

(56) Documents cités:
- EP-A2- 0 421 239
- WO-A1-01/34932
- WO-A1-94/24398
- US-A- 1 448 351
- US-A- 5 657 607

## Description

### 1. Domaine de l'invention

Le domaine de l'invention est celui des panneaux de vitrage comprenant des feuilles de verre délimitant au moins un espace interne dans lequel est réalisé un vide partiel également appelés panneaux de vitrage sous vide.

L'invention concerne plus particulièrement la réalisation du vide dans de tels panneaux.

Ces panneaux peuvent être utilisés dans tout type d'applications tels que les vitrages utilitaires (mobilier, cloisons, ...), les vitrages pour véhicules ou pour bâtiments.

### 2. Solutions de l'art antérieur

Un panneau de vitrage sous vide (« vacuum insulating glazing » en anglais) est typiquement composé d'au moins deux feuilles de verre séparées par un espace interne dans lequel a été réalisé un vide partiel. Un tel vitrage est classiquement utilisé pour ses propriétés d'isolation thermique élevée du fait du vide partiel. L'épaisseur de l'espace sous vide est typiquement de 80 µm à 800 µm

Afin d'atteindre de hautes performances d'isolation (coefficient de transmission surfacique U<0.6w/m²K), la pression à l'intérieur du vitrage doit être de l'ordre de 10⁻³ mbar ou inférieur et généralement au moins une des deux feuilles de verres est recouverte par une couche basse-émissivité ayant une émissivité idéalement inférieure à 0,05. Afin d'obtenir une telle pression à l'intérieur du vitrage, un joint d'étanchéité est placé à la périphérie des deux feuilles de verre et le vide est créé à l'intérieur du vitrage grâce à une pompe. Pour éviter que le vitrage ne s'effondre sous la pression atmosphérique (due à la différence de pression entre l'intérieur et l'extérieur du vitrage), des espaceurs sont placés de manière régulière (par exemple sous la forme d'une matrice) entre les deux feuilles de verre.

Les espaceurs ont généralement une forme cylindrique ou sphérique, on parle de piliers. Aujourd'hui, ces espaceurs sont généralement métalliques et créent donc des fuites thermiques dans le panneau de vitrage. Afin de maintenir un coefficient de transmission thermique U inférieur à 0,6W/m²K, la surface totale des espaceurs en contact avec le verre doit représenter moins de 1% de la surface du panneau de vitrage sous vide.

Différentes technologies de joints d'étanchéité existent, chacune présentant certains inconvénients. Un premier type de joint (le plus répandu) est un joint à base d'un verre à souder dont la température de fusion est inférieure à celle du verre des panneaux de verre du vitrage. La mise en oeuvre de ce type de joint limite le choix des couches basse-émissivités à celles qui ne sont pas altérées par le cycle thermique nécessaire à la mise en oeuvre du verre à souder, c'est à dire à celle qui résiste à une température pouvant aller jusqu'à 350°C. De plus, ce type de joint à base de verre à souder n'étant que très peu déformable, il ne permet pas de reprendre les effets des dilatations différentielles entre le panneau de verre du vitrage coté intérieur et le panneau de verre du vitrage coté extérieur lorsque ceux-ci sont soumis à de grandes différences de température (par exemple 40°C). Des contraintes assez importantes sont alors induites à la périphérie du vitrage et peuvent entraîner des casses des panneaux de verre du vitrage.

Un second type de joint comprend un joint métallique, par exemple un feuillard métallique d'une épaisseur mince (<500µm) soudé en périphérie du vitrage par l'intermédiaire d'une sous-couche d'accrochage recouverte au moins partiellement par une couche d'un matériau brasable de type soudure tendre d'alliage d'étain. Un avantage important de ce second type de joint par rapport au premier type de joint est qu'il peut se déformer pour reprendre les dilatations différentielles créées entre les deux panneaux de verre. Il existe différents types de sous-couches d'accrochage sur le panneau de verre.

La demande de brevet n°WO2011061208A1 présente un exemple de réalisation d'un joint d'étanchéité périphérique du second type pour vitrage sous vide. Selon cet exemple, le joint est un feuillard métallique, par exemple en cuivre, qui est soudé au moyen d'un matériau brasable sur une souche d'adhésion prévue sur la périphérie des feuilles de verre.

En ce qui concerne la réalisation du vide dans l'espace interne du panneau de vitrage, un tube en verre creux faisant communiquer l'espace interne à l'extérieur est généralement prévu sur la face principale de l'une des feuilles de verre. Ainsi, on réalise le vide partiel dans l'espace interne par pompage des gaz présents dans l'espace interne grâce à une pompe reliée à l'extrémité extérieure du tube en verre. La demande de brevet n°EP1506945A1 décrit la mise en oeuvre d'un tel tube en verre qui est placé et soudé dans un trou traversant prévue dans la face principale de l'une des feuille de verre.

Cependant, la réalisation d'un trou dans la face principale de l'une des feuilles de verre afin de pouvoir ensuite y insérer le tube en verre génère des contraintes importantes autour du trou dans la feuille de verre qui fragilisent cette dernière.

Par ailleurs, le tube en verre constitue un point faible du panneau de vitrage sous vide et nécessite donc d'être protégé contre les chocs.

En outre, ce tube en verre constitue une protrusion sur la surface de l'une des feuille de verre qui est inesthétique et nécessite donc d'être cachée.

Afin de maintenir sur la durée un niveau de vide donné dans un panneau de vitrage sous vide, on peut mettre en oeuvre un piège à vide (ou « getter » en anglais) dans le panneau de vitrage. En effet, les surfaces internes des feuilles de verre constituant le panneau de vitrage peuvent relâcher avec le temps des gaz préalablement absorbés dans le verre, ce qui conduit à faire remonter la pression interne dans le panneau de vitrage sous vide et donc à faire baisser la performance de vide.

Généralement, un tel piège à gaz est constitué d'alliages de zirconium, de vanadium, de fer, de cobalt, d'aluminium, ... et est déposé sous la forme d'une couche mince (quelques microns d'épaisseur) ou sous la forme d'un bloc disposés entre les feuilles de verre du panneau de vitrage de sorte à ne pas être vu (par exemple caché par un émail extérieur ou par une partie du joint d'étanchéité périphérique).

L'alliage du piège à gaz forme à sa surface une couche de passivation à température ambiante et nécessite donc d'être chauffé afin de faire disparaitre la couche de passivation et donc afin de conférer ses propriété de piège à gaz à l'alliage. On parle d'activation du piège à gaz par la température. Généralement, les alliages des pièges à gaz sont activés en les chauffant à environ 250°C pendant 1 heure.

Ainsi, le chauffage de l'alliage du piège à gaz risque d'altérer les propriétés des feuilles de verre et de leurs éventuelles couches fonctionnelles (telles que des couches d'isolation thermique) ainsi que d'altérer l'intégrité du joint périphérique.

La demande de brevet n°EP0421239A2 décrit un panneau de vitrage selon le préambule de la revendication 1.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique permettant de réaliser un vide partiel dans l'espace interne d'un panneau de vitrage sous vide qui génère moins de contraintes dans les feuilles de verre du panneau que les techniques classiques.

Un autre objectif de l'invention, dans au moins un de ses modes de réalisation, est de fournir une telle technique qui permette de pérenniser le vide dans le vitrage sans pour autant nuire aux feuilles de verre et/ou à leurs éventuelles couches fonctionnelles (telles que des couches d'isolation thermique) et/ou au joint périphérique.

Un autre objectif de l'invention, dans au moins un de ses modes de réalisation, est de fournir une telle technique qui permette de pérenniser le vide dans le vitrage sans pour autant encombrer l'espace entre les deux feuilles de verre.

Un autre objectif de l'invention, dans au moins un de ses modes de réalisation, est de fournir une telle technique qui permette de pérenniser le vide dans le vitrage sans pour autant nuire à l'esthétique du vitrage.

Un autre objectif de l'invention, dans au moins un de ses modes de réalisation, est de fournir une telle technique qui fragilise moins le panneau de vitrage sous vide.

Un autre objectif de l'invention, dans au moins un de ses modes de réalisation, est de fournir une telle technique qui altère moins l'esthétique du panneau que les techniques classiques.

Un autre objectif de l'invention, dans au moins un de ses modes de réalisation, est de fournir une telle technique qui soit aisée à mettre en oeuvre.

L'invention, dans au moins un de ses modes de réalisation, a encore pour objectif de fournir une telle technique qui soit peu coûteuse.

### 4. Exposé de l'invention

L' invention concerne un panneau de vitrage selon la revendication 1 comprenant une première et une seconde feuilles de verre associées ensemble par l'intermédiaire d'au moins un espaceur qui les maintient à une certaine distance l'une de l'autre et, entre lesdites feuilles de verre, un espace interne comprenant au moins une première cavité dans laquelle règne un vide inférieur à 100 mbar et qui est fermé par un joint d'étanchéité périphérique disposé à la périphérie des feuilles de verre, autour dudit espace interne, le joint d'étanchéité étant un joint métallique solidarisé respectivement aux première et seconde feuilles de verre.

Selon l'invention, le joint métallique comprend en outre au moins un tube métallique creux dont une première extrémité communique avec l'espace interne et une seconde extrémité communique avec l'extérieur du panneau, la seconde extrémité comprenant des moyens d'obturation du tube.

Selon l'invention, le tube comprend au moins un piège à gaz solidarisé à l'intérieur du tube.

Bien entendu, dans toute la suite, le tube peut avoir une section circulaire, carrée, triangulaire ou même de toute autre forme. Il peut également présenter une section constante sur toute sa longueur ou une section variable sur sa longueur. Sur sa longueur, la section du tube peut changer de géométrie, par exemple, la section peut évoluer d'une forme carrée à une forme circulaire sur la longueur du tube.

Bien entendu, dans toute la suite, les rôles des première et seconde feuilles de verre sont interchangeables.

Bien entendu, on entend par verre, tous les types de verres et matériaux transparents équivalents tels que les verres minéraux et les verres organiques. Le verre minéral peut être constitué indifféremment d'un ou plusieurs types de verres connus comme les verres sodo-calcique, les verres au bore, les verres cristallins et semi-cristallins. Le verre organique peut être un polymère ou un copolymère transparent thermodur ou thermoplastique rigide tel que, par exemple, une résine de synthèse polycarbonate, polyester ou polyvinylique transparente.

Ainsi, les moyens de mise en communication de l'espace interne avec l'extérieur du panneau de manière obturable permettent de réaliser le vide partiel dans l'espace interne sans qu'il soit nécessaire de mettre en oeuvre le tube de verre classiquement prévu dans un trou réalisé dans la face principale de l'une des feuille de verre. Ainsi, cette technique génère moins de contraintes dans les feuilles de verre du panneau que les techniques classiques.

Par ailleurs, du fait qu'elle ne nécessite pas de tube en verre formant protrusion sur l'une des feuilles de verre, cette technique fragilise moins le panneau de vitrage sous vide et altère moins l'esthétique du panneau.

Ainsi également, le fait que le tube comprennent le piège à gaz en son sein permet de réaliser l'activation du piège à gaz par chauffage localisé au niveau de la partie du tube comprenant le piège à gaz sans que le chauffage ne nuise aux feuilles de verre et/ou à leurs éventuelles couches fonctionnelles (telles que des couches d'isolation thermique) et/ou au joint périphérique.

Avantageusement, le piège à gaz comprend un revêtement disposé sur au moins une portion de la surface interne du tube.

Selon une caractéristique avantageuse de l'invention, le piège à gaz comprend une pièce de forme tubulaire prévue pour être insérée dans le tube.

Avantageusement, le piège à gaz comprend un alliage d'au moins un des matériaux suivants :
- zirconium ;
- titane ;
- vanadium ;
- fer;
- métal alcalin (par exemple l'un au moins des lithium, sodium, potassium, rubidium, césium et francium) ;
- métal alcalino-terreux (par exemple l'un au moins des magnésium, calcium, béryllium, strontium, baryum, radium).

Avantageusement, le piège à gaz comprend un alliage des matériaux suivants :
- zirconium ;
- vanadium ;
- fer.

Selon une caractéristique avantageuse de l'invention, les moyens d'obturation du tube comprennent un bouchon formé par pincement de la seconde extrémité du tube.

En effet, les portions de surface internes du tube qui sont mises en contact physique par le pincement génèrent des liaisons atomiques entre elles, au niveau de leurs couches d'atomes superficielles, qui réalisent ainsi une soudure à froid qui est très résistante et qui ne nécessite pas la mise en oeuvre de chaleur et de brasure. Bien entendu, conformément à l'invention, toute autre technique d'obturation et tout autre type de bouchon peut être mis en oeuvre, par exemple un bouchon métallique à visser, à introduire à force ou à souder sur une extrémité du tube.

Avantageusement, le joint métallique comprend au moins un matériau sélectionné parmi le cuivre et ses alliages, l'aluminium et ses alliages, le nickel et ses alliages, dans un état non oxydé.

Avantageusement, le tube métallique comprend au moins un matériau sélectionné parmi le cuivre et ses alliages, l'aluminium et ses alliages, le nickel et ses alliages, dans un état non oxydé.

En effet, ainsi, les portions de surface internes du tube qui sont mises en contact physique par pincement n'étant pas oxydées génèrent davantage de liaisons atomiques, ce qui renforce la résistance de la soudure à froid.

Avantageusement, la surface interne du tube est préalablement nettoyée (par exemple grâce à des ultrasons) afin de réduire la présence de pollutions sur cette surface (qui réduirait la création de liaison et donc la résistance de la soudure). Par exemple la surface interne est polie avec une toile émeri de grain 320 pour retirer les éventuels cristaux d'oxydes.

Selon une caractéristique avantageuse non revendiquée de l'invention, l'espace interne du panneau comprend également une seconde cavité disposée entre le joint métallique et le chant du panneau, la seconde cavité étant fermée par le joint métallique.

Avantageusement, la première extrémité du tube métallique est comprise dans la seconde cavité.

En effet, dans le cas où l'espacement entre les deux feuilles de verre est inférieure au diamètre extérieur du tube métallique, la première extrémité du tube métallique ne peut pas être insérée dans la première cavité de l'espace interne entre les feuilles de verre mais peut ainsi être insérée dans la seconde cavité de l'espace interne entre le joint métallique et le chant du panneau.

Avantageusement, le joint métallique est solidarisé par soudure à une première zone périphérique de la première feuille de verre recouverte d'un premier revêtement d'adhésion et à une seconde zone périphérique de la seconde feuille de verre recouverte d'un second revêtement d'adhésion.

Selon une caractéristique avantageuse de l'invention, le joint métallique comprend un feuillard métallique percé d'un trou dans lequel est disposé le tube métallique.

Avantageusement, le tube métallique est solidarisé au feuillard métallique par soudure.

L'invention concerne également un procédé de fabrication selon la revendication 9 d'un panneau de vitrage sous vide comprenant les étapes suivantes:
- association ensemble d'une première et d'une seconde feuilles de verre par l'intermédiaire d'au moins un espaceur qui les maintient à une certaine distance l'une de l'autre, entre lesdites feuilles de verre, un espace interne forme une première cavité ;
- fermeture de l'espace interne par un joint d'étanchéité périphérique disposé à la périphérie des feuilles de verre, autour dudit espace interne, le joint d'étanchéité étant un joint métallique solidarisé respectivement aux première et seconde feuilles de verre ;
- mise sous vide de l'espace interne afin d'obtenir un vide inférieur à 100 mbar.

Selon l'invention, le joint métallique comprend en outre au moins un tube métallique creux dont une première extrémité communique avec l'espace interne et une seconde extrémité communique avec l'extérieur du panneau.

Selon l'invention, le procédé comprend en outre l'étape suivante :
solidarisation d'au moins un piège à gaz à l'intérieur du tube.

Avantageusement, le procédé comprend une étape de revêtement d'au moins une portion de la surface interne du tube avec le piège à gaz.

Avantageusement, le procédé comprend une étape d'insertion du piège à gaz dans le tube.

Avantageusement, le procédé comprend en outre l'étape suivante :
- obturation de la seconde extrémité du tube une fois l'étape de mise sous vide terminée.

Selon une caractéristique avantageuse de l'invention, l'étape d'obturation est réalisée par pincement de la seconde extrémité du tube.

Avantageusement, le joint métallique est solidarisé par soudure à une première zone périphérique de la première feuille de verre recouverte d'un premier revêtement d'adhésion et à une seconde zone périphérique de la seconde feuille de verre recouverte d'un second revêtement d'adhésion.

Avantageusement, le joint métallique comprend un feuillard métallique et en ce que le procédé comprend une étape de perçage du feuillard afin de réaliser un trou et une étape d'insertion du tube métallique dans le trou.

Selon une caractéristique avantageuse de l'invention, le tube métallique est solidarisé au feuillard métallique par soudure.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un schéma d'un panneau de vitrage sous vide selon un mode de réalisation de l'invention ;
- la figure 2 présente un joint d'étanchéité périphérique du panneau de la figure selon un mode de réalisation de l'invention ;
- la figure 3 illustre un procédé de fabrication d'un panneau de vitrage selon un mode de réalisation de l'invention.

### 6. Description d'un mode de réalisation de l'invention

La présente invention va être décrite en faisant référence à des modes de réalisation particuliers et en faisant référence à certains dessins mais l'invention n'est pas limitée par cela et n'est limitée que par les revendications. Dans les dessins, la taille et les dimensions relatives de certains éléments peuvent être exagérés et ne pas être dessinés à l'échelle pour des raisons d'illustration.

De plus les termes premier, second, troisième et similaire dans la description et dans les revendications sont utilisés pour distinguer entre des éléments similaires et non pas nécessairement pour décrire une séquence qu'elle soit temporelle, spatiale, à des fins de classement ou autre. Il est bien entendu que les termes ainsi utilisés sont interchangeables dans des circonstances appropriées et que les modes de réalisations de l'invention décrits ici sont capables d'opérer dans d'autres séquences que celles décrites ou illustrées ici.

De plus, les termes haut, bas, au-dessus, en-dessous et similaire dans la description et les revendications sont utilisés pour des raisons de description et non pas nécessairement pour décrire des positions relatives. Il est bien entendu que les termes ainsi utilisés sont interchangeables dans des circonstances appropriées et que les modes de réalisation de l'invention décrits ici sont capables d'être opéré dans d'autres orientations que celles décrites ou illustrées ici.

Il est à remarquer que le terme "comprenant", utilisé dans les revendications, ne doit pas être interprété comme étant restreint aux moyens listés après celui-ci; il n'exclue pas d'autres éléments ou étapes. Il doit donc être interprété comme spécifiant la présence des éléments spécifiés, entiers, étapes ou composants référés, mais n'exclue pas la présence ou l'addition d'un élément, entier, étape ou composant, ou groupe de ceux-ci. Donc l'étendue de l'expression "un appareil comprenant les moyens A et B" ne doit pas être limité à des appareils consistant seulement des composants A et B. Cela veut dire qu'en ce qui concerne la présente invention, les seuls composants pertinents de l'appareil sont A et B.

Tel qu'utilisé ici et à moins d'indications contraires, par « étanchéité », il est entendu l'étanchéité à l'air ou tout autre gaz présent dans l'atmosphère.

Tel qu'utilisé ici et à moins d'indications contraires, par « couche d'isolation thermique » il est entendu une couche d'oxyde métallique ayant une émissivité inférieure à 0,2, préférentiellement inférieure à 0,1 et plus préférentiellement inférieure à 0,05. Une couche d'isolation thermique peut être par exemple l'une des couches suivantes : Planibel G, Planibel Top N, Top N+ et Top 1.0 commercialisées par la société AGC.

Tel qu'utilisé ici et à moins d'indications contraires le terme « espaceur » se rapporte à un ou plusieurs éléments assurant une distance relativement constante entre deux feuilles de verre adjacentes.

On se place ci-après dans le cas particulier d'un panneau de vitrage selon l'invention qui est un panneau de vitrage sous vide. Bien entendu, l'invention s'applique également à tout type de panneau de vitrage comprenant des feuilles de verre (deux, trois ou plus) délimitant des espaces internes (également appelés panneaux de vitrage multiple) isolants ou non isolants à condition qu'un vide partiel soit réalisé dans au moins un des espaces internes.

Par exemple, l'invention s'applique également à un panneau de triple vitrage dont un premier espace interne comprend un vide partiel et un second espace interne emprisonne une lame de gaz, par exemple mais non exclusivement de l'air sec, de l'argon (Ar), du krypton (Kr), du xénon (Xe), de l'héxafluorure de soufre (SF₆) ou même un mélange de certains de ces gaz.

Bien entendu, d'autres variantes sont envisageables notamment en remplaçant une des feuilles de verre du panneau par un panneau de verre feuilleté ou par tout autre ajout ou modification.

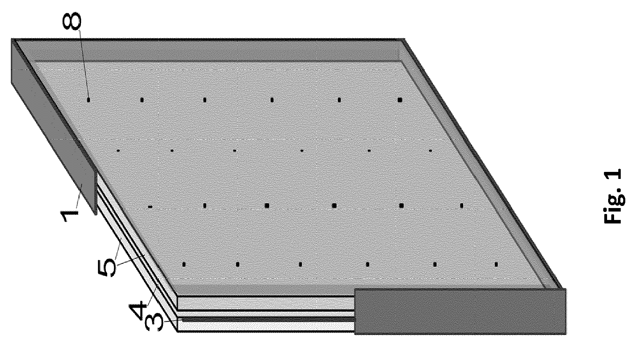

On présente, en relation avec les ***figure 1******,*** une vue globale d'un panneau de vitrage sous vide selon un mode de réalisation de l'invention.

Le panneau de vitrage sous vide comprend des première et seconde feuilles de verre 5 (par exemple des feuilles de verre clair sodo-silico-calcique d'épaisseur 6 mm) associées ensemble par l'intermédiaire d'au moins un espaceur 8 qui les maintient à une certaine distance l'une de l'autre. Ainsi, les première et seconde feuilles de verre 5 sont séparées par un premier espace interne 4 comprenant une première cavité 41. Dans l'espace interne 4, il règne un vide inférieur à 100 mbar, par exemple inférieur à 1 mbar, par exemple égal à 10⁻³ mbar (obtenu par pompage dans l'espace interne 4 grâce à une pompe à vide).

Par exemple, l'épaisseur de l'espace interne est de l'ordre de 1mm (bien entendu, toute autre épaisseur de l'espace interne peut être mise en oeuvre).

Pour faciliter le pompage, un dégazage des surfaces de l'espace interne peut être réalisé de manière préliminaire au moyen par exemple de l'application d'un flux d'ozone à plus de 100°C sur les surfaces de l'espace interne.

Bien entendu, tout autre type de verre, et d'épaisseur de verre peuvent être mis en oeuvre conformément à l'invention.

Le panneau de vitrage sous vide comprend également une pluralité d'espaceurs 8 selon l'invention, les espaceurs étant pris en sandwich entre les première et seconde feuilles de verre 5 de manière à maintenir le premier espace entre ces feuilles de verre 5.

Par exemple, les espaceurs sont disposés entre les première et seconde feuille de verre de sorte à former une matrice dont le pas est compris entre 20 et 80 mm et préférentiellement compris entre 30 et 60 mm.

Les espaceurs 8 peuvent avoir des formes différentes telles que cylindrique, sphérique, filaire en forme de sablier, en forme de croix, ...

On se place dans la suite dans le cadre d'un exemple conforme à l'invention selon lequel les espaceurs 8 sont réalisés en acier AISI301 et présentent une forme de C.

L'étape de mise en forme de l'acier austénitique comprend tout d'abord une étape d'obtention d'un fil de section cylindrique par tréfilage. Bien entendu, l'étape d'obtention du fil peut également être obtenue par extrusion à chaud dudit acier AISI301 puis tréfilage permettant d'atteindre le diamètre final du fil.

Par exemple, en partant d'un fil de 5mm de diamètre sur lequel on réalise le tréfilage, on obtient un fil affiné présentant un diamètre de 1mm (ce qui représente une réduction de la section du fil de 80%).

L'étape de mise en forme de l'acier austénitique comprend ensuite une étape de découpe (par exemple au moyen d'une pince coupante) d'au moins une portion du fil pour former ledit espaceur. Par exemple, la longueur de ladite portion de fil est de 4 mm.

Selon un mode de mise en oeuvre avantageux, l'étape de mise en forme de l'acier austénitique comprend ensuite une étape de courbure de ladite portion de fil sur au moins une de ses portions de sorte à former une portion de boucle dont le rayon de courbure maximum est de 0,5 mm.

Bien entendu, l'étape de courbure peut s'effectuer avant l'étape de découpe.

Préférentiellement, la portion de fil est une portion de cercle dont le rayon de courbure est de 0,5 mm.

Ainsi, dans le cadre de ce second exemple, l'étape d'écrouissage est confondue avec l'étape de tréfilage.

Ainsi, lors de l'opération de tréfilage, une réduction de section du fil de 80% induit une augmentation de la résistance de l'acier inoxydable AISI de 620MPa à environ 1400 MPa.

Par exemple, si on utilise des espaceurs en AISI non écrouis (qui présentent donc une résistance à la compression de 620 MPa) qui ont une surface de contact équivalente à un disque de 250 µm de rayon, un espacement de 30 mm entre ceux-ci, on obtient un panneau de vitrage sous vide présentant une valeur de coefficient U égale à 0,8 W/(m²K).

Par contre, en utilisant les espaceurs selon l'invention ci-dessus mentionnés (en AISI 301 écroui et mis en forme de C) qui présentent une résistance à la compression de 1400MPa, on peut diminuer le nombre d'espaceurs en les éloignant de 50 mm tout en améliorant la valeur U est devient environ 0,5 W/(m²K).

Les valeurs U des vitrages sous vide sont estimées sur base d'un vitrage décrit précédemment, incluant une couche type basse émissivité. Les transmissions thermiques (valeurs U) ont été évaluées en utilisant la méthode décrite dans la publication de l'Université de Sydney : DETERMINATION OF THE OVERALL HEAT TRANSMISSION COEFFICIENT (U-VALUE) OF VACUUM GLAZING, TM.Simko, AH.Elmahdy and RE.Collins. ASHRAE Transactions, 105, pt 2, p. 1-9. 1999.

Afin d'améliorer encore les performances en terme d'isolation thermique, une couche d'isolation thermique 3 peut être disposée sur une surface interne d'au moins une des feuilles de verre 5.

Les deux feuilles de verre 5 sont assemblées de manière étanche au gaz (assurant le vide) via un joint d'étanchéité périphérique 1 placé à la périphérie des feuilles de verre 5 autour de l'espace interne 4 refermant la première cavité 41. Ainsi le joint d'étanchéité périphérique 1 ferme de manière étanche (vis-à-vis des gaz présents à l'extérieur de l'espace interne) l'espace interne.

Le joint d'étanchéité 1 est un joint métallique 1 solidarisé respectivement aux première et seconde feuilles de verre 5.

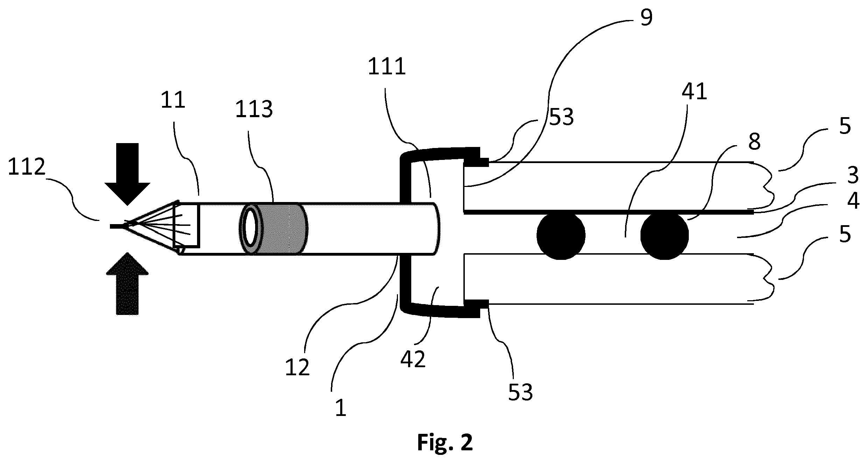

On présente, en relation avec la ***figure 2*** un joint d'étanchéité périphérique 1 du panneau de la figure 1 selon un mode de réalisation de l'invention. Sur la figure 2 n'est représenté qu'une portion de la section du panneau de vitrage.

Par exemple, le joint métallique 1 est solidarisé par soudure (par exemple au moyen d'une brasure à base d'étain et de plomb) à une première zone périphérique de la première feuille de verre 5 recouverte d'un premier revêtement d'adhésion 53 et à une seconde zone périphérique de la seconde feuille de verre 5 recouverte d'un second revêtement d'adhésion 53.

Le joint métallique 1 comprend des moyens de mise en communication 11 de l'espace interne 4 avec l'extérieur du panneau, les moyens de communication 11 étant obturables. Par exemple, les moyens de mise en communication comprennent un tube métallique creux 11 (dont le diamètre externe est par exemple de 4mm et le diamètre interne est par exemple de 2mm) dont une première extrémité 111 communique avec l'espace interne 4 et une seconde extrémité 112 communique avec l'extérieur du panneau, la seconde extrémité comprenant des moyens d'obturation du tube. Bien entendu, selon une variante de l'invention, les moyens de mise en communication comprennent plusieurs tels tubes métalliques creux (par exemple deux tubes, ce qui peut par exemple faciliter la mise sous vide du panneau et la mise en oeuvre d'éventuels dégazages des surfaces de l'espace interne du panneau).

Par exemple, le joint métallique 1 comprend un feuillard de cuivre dans un état non oxydé. Le feuillard métallique est percé d'un trou 12 dans lequel est disposé le tube métallique 11. Le tube métallique 11 est solidarisé au feuillard métallique par soudure (par exemple au moyen d'une brasure à base d'étain et de plomb). Par exemple, le tube métallique est constitué de cuivre. Bien entendu, il peut être constitué par tout autre métal ou alliage de métal(métaux), par exemple en nickel (ou l'un de ses alliages), en aluminium (ou l'un de ses alliages), ...

Avantageusement, le tube métallique 11 est réalisé en cuivre de grade OFHC (pour « Oxygen Free High Conductivity ») référencé aussi sous la terminologie Cu-c2 ou encore Cu-OFE et doit avoir subi un recuit entre 650 et 850°C pendant 30 minutes sous atmosphère d'hydrogène sec. En effet, ce traitement est avantageux puisque le matériau va subir une déformation d'environ 350% lors du pincement. Un autre type de matériau pouvant être utilisé pour réaliser le tube 11 est le nickel de haute pureté, par exemple un Nickel A, NI270, NI200 ou encore 99.4% nickel selon la norme ASTM-B161), par exemple, le tube 11 peut avoir subi un recuit à 1150°C pendant 30 minutes avant le pincement. Enfin, d'autres matériaux comme l'aluminium, le fer pur, l'or, le platine, l'argent ou encore le niobium peuvent également convenir pour réaliser le tube 11.

Avantageusement, le tube métallique 11 (dont le diamètre externe est par exemple de 4mm et le diamètre interne est par exemple de 2mm) comprend un piège à gaz 113 solidarisé à l'intérieur du tube 11.

Par exemple, le piège à gaz 113 comprend une pièce de forme tubulaire 113 prévue pour être insérée dans le tube. La solidarisation de la pièce tubulaire 113 au tube peut se faire par collage, par soudure ou même par insertion à force (le diamètre extérieur de la pièce tubulaire étant adapté en fonction du diamètre intérieur du tube 11 et de la technique de solidarisation choisie).

Par exemple, le piège à gaz est un produit commercialisé par la société SAES Getter référencé sous le nom St2002 Pills de forme cylindrique avec une hauteur de hauteur 4mm et un diamètre extérieur de 2mm afin d'être inséré à force dans le tube métallique 11. Ainsi, le piège à gaz 113 est constitué d'un alliage de zirconium, de vanadium et de fer et est extrêmement actif dans l'adsorption de tous les gaz atmosphériques, de l'oxygène et l'azote jusque la vapeur d'eau, le méthane, les composés carbonés et l'hydrogène. Les conditions optimales d'activation de ce piège à gaz sont de 350°C pendant 15min.

L'espace interne 4 du panneau comprend également une seconde cavité 42 disposée entre le joint métallique 1 et le chant 9 du panneau, la seconde cavité 42 étant fermée par le joint métallique 1. La première extrémité du tube métallique est comprise dans la seconde cavité 4.

Par exemple, les moyens d'obturation du tube 11 comprennent un bouchon formé par pincement de la seconde extrémité 112 du tube (bien entendu, conformément à l'invention, toute autre technique d'obturation et tout autre type de bouchon peut être mis en oeuvre, par exemple un bouchon métallique à visser, introduire à force ou souder sur la seconde extrémité du tube 112). Pour réaliser le pincement de la seconde extrémité 112 du tube 11, on peut par exemple utiliser une pince exerçant une forte pression sur la seconde extrémité du tube 11, par exemple une pince commercialisé sous la référence « Pinch-Off Tool Manual Series (ou GST Series ou HAC Series) » par la société C. H. Bull Co ou une pince commercialisée sous la référence «HY-187 (ou HY-250 ou HY-500 ou encore HY-750, en fonction du diamètre du tube 11) Pinch-Off Tool » par la société Custom Products & Services.

Ainsi, les portions de surface internes du tube 11 qui sont mises en contact physique par le pincement génèrent des liaisons atomiques entre elles, au niveau de leurs couches d'atomes superficielles, qui réalisent ainsi une soudure à froid qui est très résistante et qui ne nécessite pas la mise en oeuvre de chaleur et de brasure.

Le fait que le cuivre du tube est dans un état non oxydé implique que les portions de surface internes du tube qui sont mises en contact physique par pincement génèrent davantage de liaisons atomiques (par rapport à un état oxydé du cuivre), ce qui renforce la résistance de la soudure à froid.

Par exemple, la surface interne du tube est préalablement nettoyée (par exemple grâce à des ultrasons) afin de réduire la présence de pollutions sur cette surface (qui réduirait la création de liaison et donc la résistance de la soudure). Par exemple, la surface interne est polie avec une toile émeri de grain 320 pour retirer les éventuels cristaux d'oxydes. On peut également polir la surface externe du tube avec une toile émeri de grain 320 pour retirer les éventuels cristaux d'oxydes et ainsi assurer le bon fonctionnement de la pince précitée.

Par exemple, après fermeture du tube 11 par pincement de la seconde extrémité 112 du tube 11, la seconde extrémité 112 du tube 11 ainsi que la surface externe du tube situé à l'extérieur du panneau peuvent être recouverte d'un revêtement protecteur, par exemple un alliage métallique. On peut également protéger la seconde extrémité 112 du tube 11 au moyen d'un capuchon en plastique.

Par ailleurs, le matériau d'adhésion constituant les revêtements d'adhésion 53 peut être sélectionné, par exemple, dans le groupe composé du cuivre et de ses alliages (par exemple avec du titane et/ou du chrome), de l'aluminium et de ses alliages, du fer et de ses alliages (tel que les acier austénitiques Fe-Ni : e.g. Fer (50-55% en poids, par exemple 52% en poids), Nickel (45-50% en poids, par exemple 48% en poids) tel que l'alliage 48), les alliages de fer comprenant les métaux suivant : Fer (53-55% en poids, par exemple 53.5% en poids), Nickel (28-30% en poids, par exemple 29% en poids) et Cobalt (16-18% en poids, par exemple 17% en poids), et le Kovar®), du platine et de ses alliages, du nickel et de ses alliages, de l'or et de ses alliages, de l'argent et de ses alliages, de l'arséniure de gallium et de l'étain ou de ses alliages. Cette liste n'étant pas exhaustive.

Bien entendu, le joint d'étanchéité métallique 1 peut prendre toute autre forme, il peut par exemple avoir la forme de marches tel que décrit dans la demande de brevet WO2011061208A1.

Par ailleurs, il peut, par exemple, être réalisé grâce à la jonction par soudure de deux portions de joints métalliques eux même soudés aux feuilles de verre. Par ailleurs toute autre technique de solidarisation du joint d'étanchéité au(x) évidement(s) peut être mise en oeuvre sans sortir du cadre de l'invention, par exemple une soudure grâce à de la soudure de verre directement sur le verre (aucun revêtement d'adhésion 53 n'est nécessaire dans ce cas) ou par emboitement à force.

Bien entendu, selon des variantes non illustrée du mode de réalisation précité, le panneau de vitrage peut comprendre en outre une troisième feuille de verre séparée de l'une quelconque des première et seconde feuilles de verre (par exemple de la seconde feuille de verre) par un second espace afin de former une seconde cavité.

Selon une première variante, un second joint d'étanchéité est en outre placé à la périphérie des troisième et seconde feuilles de verre afin de maintenir un second espace interne (par exemple de 16mm d'épaisseur), ledit second espace interne étant rempli d'au moins un gaz. Le gaz peut être par exemple, de l'air, de l'argon, de l'azote, du krypton, du xénon, du SF6, du CO₂, ou tout autre gaz isolant thermique.

Selon une seconde variante, les troisième et seconde feuilles de verre sont assemblées de manière étanche au gaz (assurant le vide) via un joint d'étanchéité placé à la périphérie des feuilles de verre refermant un second espace interne et une pluralité d'espaceurs sont pris en sandwich entre les troisième et seconde feuilles de verre de manière à maintenir le second espace interne entre ces feuilles de verre. On obtient ainsi un triple vitrage sous vide.

Bien entendu, d'autres variantes de l'nvention sont envisageables notamment en remplaçant une feuille de verre par un panneau de verre feuilleté ou par tout autre ajout ou modification tombant sous l'objet de la revendication 1.

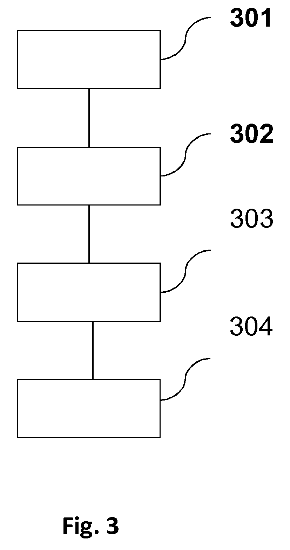

On présente, en relation avec la ***figure 3****,* un procédé de fabrication du panneau de vitrage sous vide de la figure 1 selon un mode de réalisation de l'invention.

Le procédé de fabrication comprend les étapes suivantes :
- association ensemble 301 des première et seconde feuilles de verre 5 par l'intermédiaire d'au moins un espaceur 8 ;
- fermeture 302 de l'espace interne 4 (entre lesdites feuilles de verre 5) par le joint d'étanchéité périphérique 1 métallique (comprenant le feuillard métallique et le tube métallique creux 11 dont une première extrémité (111) communique avec l'espace interne et une seconde extrémité (112) communique avec l'extérieur du panneau) disposé à la périphérie des feuilles de verre 5, autour dudit espace interne 4 ;

- solidarisation du piège à gaz 113 à l'intérieur du tube 11 par revêtement d'au moins portion de la surface interne du tube avec le piège à gaz (dans le cas d'un piège à gaz se présentant sous la forme d'un revêtement) ou par solidarisation (par exemple par collage ou par insertion à force) du piège à gaz 113 dans le tube (par exemple dans le cas d'un piège à gaz 113 se présentant sous la forme d'une pièce de forme tubulaire prévue pour être insérée dans le tube) ;
- mise sous vide 303 de l'espace interne 4 afin d'obtenir un vide inférieur à 100 mbar, par exemple inférieur à 1mbar, par exemple 10⁻³ mbar ;
- obturation 304 de la seconde extrémité 112 du tube 11 une fois l'étape de mise sous vide terminée, l'obturation étant réalisée par pincement de la seconde extrémité 112 du tube 11.

Selon un mode de réalisation de l'invention, l'étape de fermeture 302 comprend l'étape suivante :
- solidarisation du le joint métallique par soudure à la première zone périphérique de la première feuille de verre recouverte du premier revêtement d'adhésion 53 et à la seconde zone périphérique de la seconde feuille de verre recouverte du second revêtement d'adhésion.

Le procédé comprend également une étape de perçage du feuillard afin de réaliser le trou 12, une étape d'insertion du tube métallique 11 dans le trou 12 et, préférentiellement, une étape de solidarisation du tube métallique au feuillard métallique par soudure.

Bien entendu, l'invention n'est pas limitée aux exemples de réalisation mentionnés ci-dessus.

## Revendications

1. Panneau de vitrage comprenant une première (5) et une seconde (5) feuilles de verre associées ensemble par l'intermédiaire d'au moins un espaceur (8) qui les maintient à une certaine distance l'une de l'autre et, entre lesdites feuilles de verre (5), un espace interne (4) comprenant au moins une première cavité (4), dans lequel règne un vide inférieur à 100 mbar et qui est fermé par un joint d'étanchéité périphérique disposé à la périphérie des feuilles de verre, autour dudit espace interne (4), le joint d'étanchéité (1) étant un joint métallique solidarisé respectivement aux première et seconde feuilles de verre (5),
**caractérisé en ce que** le joint métallique (1) comprend en outre au moins un tube métallique creux (11) dont une première extrémité (111) communique avec l'espace interne (4) et une seconde extrémité (112) communique avec l'extérieur du panneau, la seconde extrémité (112) comprenant des moyens d'obturation du tube,
et **en ce que** le tube comprend au moins un piège à gaz (113) solidarisé à l'intérieur du tube (11).

2. Panneau de vitrage selon la revendication 1, **caractérisé en ce que** le piège à gaz comprend un revêtement disposé sur au moins une portion de la surface interne du tube.

3. Panneau de vitrage selon la revendication 1, **caractérisé en ce que** le piège à gaz (113) comprend une pièce de forme tubulaire prévue pour être insérée dans le tube.

4. Panneau de vitrage selon l'une quelconque des revendications précédentes, **caractérisé en ce que** le piège à gaz comprend un alliage des matériaux suivants :
- zirconium;
- vanadium ;
- fer.

5. Panneau de vitrage selon l'une quelconque des revendications précédentes, **caractérisé en ce que** les moyens d'obturation du tube comprennent un bouchon formé par pincement de la seconde extrémité (112) du tube.

6. Panneau de vitrage selon la revendication précédente, **caractérisé en ce que** le tube métallique (11) comprend au moins un matériau sélectionné parmi le cuivre et ses alliages, l'aluminium et ses alliages, le nickel et ses alliages, dans un état non oxydé.

7. Panneau de vitrage selon l'une quelconque des revendications précédentes, **caractérisé en ce que** le joint métallique (1) est solidarisé par soudure à une première zone périphérique de la première feuille de verre recouverte d'un premier revêtement d'adhésion (53) et à une seconde zone périphérique de la seconde feuille de verre recouverte d'un second revêtement d'adhésion (53).

8. Panneau de vitrage selon la revendication 2 et l'une quelconque des revendications 3 à 7, **caractérisé en ce que** le joint métallique (1) comprend un feuillard métallique percé d'un trou (12) dans lequel est disposé le tube métallique (11).

9. Procédé de fabrication d'un panneau de vitrage sous vide selon l'une quelconque des revendications 1 à 8 comprenant les étapes suivantes :
- association ensemble (301) d'une première (5) et d'une seconde (5) feuilles de verre par l'intermédiaire d'au moins un espaceur (8) qui les maintient à une certaine distance l'une de l'autre, entre lesdites feuilles de verre (5), un espace interne (4) comprenant une première cavité (41) ;
- fermeture (302) de l'espace interne (4) par un joint d'étanchéité périphérique (1) disposé à la périphérie des feuilles de verre, autour dudit espace interne (4), le joint d'étanchéité étant un joint métallique solidarisé respectivement aux première et seconde feuilles de verre ;
- mise sous vide (303) de l'espace interne (4) afin d'obtenir un vide inférieur à 100 mbar ;
**caractérisé en ce que** le joint métallique (1) comprend en outre au moins un tube métallique creux (11) dont une première extrémité (111) communique avec l'espace interne (4) et une seconde extrémité (112) communique avec l'extérieur du panneau,
et **en ce que** le procédé comprend en outre l'étape suivante :
- solidarisation d'au moins un piège à gaz (113) à l'intérieur du tube (11).

10. Procédé selon la revendication 9, **caractérisé en ce qu'**il comprend une étape de revêtement d'au moins portion de la surface interne du tube avec le piège à gaz.

11. Procédé selon la revendication 9, **caractérisé en ce qu'**il comprend une étape d'insertion du piège à gaz dans le tube.

12. Procédé selon l'une quelconque des revendications 9 à 11, **caractérisé en ce que** le procédé comprend en outre l'étape suivante :
- obturation (304) de la seconde extrémité (112) du tube (11) une fois l'étape de mise sous vide terminée.

13. Procédé selon la revendication 12, **caractérisé en ce que** l'étape d'obturation est réalisée par pincement de la seconde extrémité (112) du tube (11).

14. Procédé selon l'une quelconque des revendications 9 à 13, **caractérisé en ce que** le joint métallique (1) est solidarisé par soudure à une première zone périphérique de la première feuille de verre recouverte d'un premier revêtement d'adhésion (53) et à une seconde zone périphérique de la seconde feuille de verre recouverte d'un second revêtement d'adhésion (53).

15. Procédé selon l'une quelconque des revendications 9 à 14, **caractérisé en ce que** le joint métallique comprend un feuillard métallique et **en ce que** le procédé comprend une étape de perçage du feuillard afin de réaliser un trou (12) et une étape d'insertion du tube métallique (11) dans le trou (12).

## Patentansprüche

1. Verglasung, umfassend eine erste (5) und eine zweite (5) Glasscheibe, die mit Hilfe mindestens eines Abstandshalters (8) miteinander verbunden sind, der sie in einem gewissen Abstand zueinander hält, und zwischen den Glasscheiben (5) einen Innenraum (4), umfassend mindestens einen ersten Hohlraum (4), in dem ein Vakuum unter 100 mbar herrscht, und der durch eine Umfangsdichtung geschlossen ist, die an der Peripherie der Glasscheiben um den Innenraum (4) angeordnet ist, wobei die Dichtung (1) eine metallische Dichtung ist, die mit der ersten bzw. zweiten Glasscheibe (5) fest verbunden ist,
**dadurch gekennzeichnet, dass** die metallische Dichtung (1) ferner mindestens ein hohles metallisches Rohr (11) umfasst, von dem ein erstes Ende (111) mit dem Innenraum (4) in Verbindung steht, und ein zweites Ende (112) mit dem Außenbereich der Verglasung in Verbindung steht, wobei das zweite Ende (112) Verschlussmittel des Rohrs umfasst,
und dass das Rohr mindestens eine Gasfalle (113) umfasst, die mit dem Inneren des Rohrs (11) fest verbunden ist.

2. Verglasung nach Anspruch 1, **dadurch gekennzeichnet, dass** die Gasfalle eine Verkleidung umfasst, die auf mindestens einem Abschnitt der Innenfläche des Rohrs angeordnet ist.

3. Verglasung nach Anspruch 1, **dadurch gekennzeichnet, dass** die Gasfalle (113) ein röhrenförmiges Teil umfasst, das dazu vorgesehen ist, in das Rohr eingesetzt zu werden.

4. Verglasung nach einem der vorhergehenden Ansprüche, **dadurch gekennzeichnet, dass** die Gasfalle eine Legierung aus den folgenden Materialien umfasst:
- Zirkonium;
- Vanadium;
- Eisen.

5. Verglasung nach einem der vorhergehenden Ansprüche, **dadurch gekennzeichnet, dass** die Verschlussmittel des Rohrs einen Verschluss umfassen, der durch Zusammenklemmen des zweiten Endes (112) des Rohrs gebildet ist.

6. Verglasung nach dem vorhergehenden Anspruch, **dadurch gekennzeichnet, dass** das metallische Rohr (11) mindestens ein Material umfasst, das unter Kupfer und seinen Legierungen, Aluminium und seinen Legierungen, Nickel und seinen Legierungen in einem nicht oxidierten Zustand ausgewählt ist.

7. Verglasung nach einem der vorhergehenden Ansprüche, **dadurch gekennzeichnet, dass** die metallische Dichtung (1) durch Schweißen mit einer ersten Umfangszone der ersten Glasscheibe, die mit einer ersten Haftverkleidung (53) überzogen ist, und mit einer zweiten Umfangszone der zweiten Glasscheibe, die mit einer zweiten Haftverkleidung (53) überzogen ist, verbunden ist.

8. Verglasung nach Anspruch 2 und einem der Ansprüche 3 bis 7, **dadurch gekennzeichnet, dass** die metallische Dichtung (1) ein Metallband umfasst, das mit einem Loch (12) versehen ist, in dem das metallische Rohr (11) angeordnet ist.

9. Verfahren zur Herstellung einer Vakuumverglasung nach einem der Ansprüche 1 bis 8, umfassend die folgenden Schritte:
- Verbinden (301) einer ersten (5) und einer zweiten Glasscheibe (5) mit Hilfe mindestens eines Abstandshalters (8), der sie in einem gewissen Abstand zueinander hält, mit zwischen den Glasscheiben (5) einem Innenraum (4), der einen ersten Hohlraum (41) umfasst;
- Verschließen (302) des Innenraums (4) durch eine Umfangsdichtung (1), die an der Peripherie der Glasscheiben um den Innenraum (4) angeordnet ist, wobei die Dichtung eine metallische Dichtung ist, die mit der ersten bzw. der zweiten Glasscheibe fest verbunden ist;
- Setzen des Innenraums (4) unter Vakuum (303), um ein Vakuum unter 100 mbar zu erhalten;
**dadurch gekennzeichnet, dass** die metallische Dichtung (1) ferner mindestens ein hohles metallisches Rohr (11) umfasst, von dem ein erstes Ende (111) mit dem Innenraum (4) in Verbindung steht, und ein zweites Ende (112) mit dem Außenbereich der Verglasung in Verbindung steht,
und dass das Verfahren ferner den folgenden Schritt umfasst:
- Verbinden mindestens einer Gasfalle (113) mit dem Inneren des Rohrs (11).

10. Verfahren nach Anspruch 9, **dadurch gekennzeichnet, dass** es einen Schritt der Verkleidung mindestens eines Abschnitts der Innenfläche des Rohrs mit der Gasfalle umfasst.

11. Verfahren nach Anspruch 9, **dadurch gekennzeichnet, dass** es einen Schritt des Einsetzens der Gasfalle in das Rohr umfasst.

12. Verfahren nach einem der Ansprüche 9 bis 11, **dadurch gekennzeichnet, dass** das Verfahren ferner den folgenden Schritt umfasst:
- Verschließen (304) des zweiten Endes (112) des Rohrs (11), wenn der Schritt des Herstellens eines Vakuums beendet ist.

13. Verfahren nach Anspruch 12, **dadurch gekennzeichnet, dass** der Schritt des Verschließens durch Zusammenklemmen des zweiten Endes (112) des Rohrs (11) erfolgt.

14. Verfahren nach einem der Ansprüche 9 bis 13, **dadurch gekennzeichnet, dass** die metallische Dichtung (1) durch Schweißen mit einer ersten Umfangszone der ersten Glasscheibe, die mit einer ersten Haftverkleidung (53) überzogen ist, und mit einer zweiten Umfangszone der zweiten Glasscheibe, die mit einer zweiten Haftverkleidung (53) überzogen ist, fest verbunden ist.

15. Verfahren nach einem der Ansprüche 9 bis 14, **dadurch gekennzeichnet, dass** die metallische Dichtung ein Metallband umfasst, und dass das Verfahren einen Schritt des Lochens des Bandes, um ein Loch (12) herzustellen, und einen Schritt des Einsetzens des metallischen Rohrs (11) in das Loch (12) umfasst.

## Claims

1. Glazing panel comprising a first glass sheet (5) and a second glass sheet (5) that are associated together by way of at least one spacer (8) that holds said sheets (5) a certain distance apart, and, between said glass sheets (5), an internal space (4) comprising at least one first cavity (4), in which space there is a vacuum with a pressure of less than 100 mbar, said space (4) being closed with a peripheral tightness seal placed on the periphery of the glass sheets around said internal space (4), the tightness seal (1) being a metal seal securely fastened to the first and second glass sheets (5), respectively,
**characterized in that** the metal seal (1) furthermore comprises at least one hollow metal tube (11), a first end (111) of which communicates with the internal space (4) and a second end (112) of which communicates with the exterior of the panel, the second end (112) comprising means for blocking the tube,
and **in that** the tube comprises at least one gas getter (113) securely fastened to the interior of the tube (11).

2. Glazing panel according to Claim 1, **characterized in that** the gas getter comprises a coating placed on at least one portion of the internal surface of the tube.

3. Glazing panel according to Claim 1, **characterized in that** the gas getter (113) comprises a tubular part provided to be inserted into the tube.

4. Glazing panel according to any one of the preceding claims, **characterized in that** the gas getter comprises an alloy of the following materials:
- zirconium;
- vanadium;
- iron.

5. Glazing panel according to any one of the preceding claims, **characterized in that** the means for blocking the tube comprise a plug formed by pinching off the second end (112) of the tube.

6. Glazing panel according to the preceding claim, **characterized in that** the metal tube (11) comprises at least one material selected from copper and its alloys, aluminum and its alloys and nickel and its alloys, in an unoxidized state.

7. Glazing panel according to any one of the preceding claims, **characterized in that** the metal seal (1) is securely fastened by soldering to a first peripheral zone of the first glass sheet covered with a first adhesion coating (53) and to a second peripheral zone of the second glass sheet covered with a second adhesion coating (53).

8. Glazing panel according to Claim 2 and any one of Claims 3 to 7, **characterized in that** the metal seal (1) comprises a metal strip drilled with a hole (12) into which the metal tube (11) is placed.

9. Process for manufacturing a vacuum-insulated glazing panel according to any one of Claims 1 to 8, comprising the following steps:
- associating (301) together a first glass sheet (5) and a second glass sheet (5) by way of at least one spacer (8) that holds said sheets (5) a certain distance apart, between said glass sheets (5), an internal space (4) comprising a first cavity (41);
- closing (302) the internal space (4) with a peripheral tightness seal (1) placed on the periphery of the glass sheets, around said internal space (4), the tightness seal being a metal seal securely fastened to the first and second glass sheets, respectively;
- pumping down (303) the internal space (4) in order to obtain a vacuum with a pressure of less than 100 mbar,
**characterized in that** the metal seal (1) furthermore comprises at least one hollow metal tube (11), a first end (111) of which communicates with the internal space (4) and a second end (112) of which communicates with the exterior of the panel,
and **in that** the process furthermore comprises the following step:
- securely fastening at least one gas getter (113) to the interior of the tube (11).

10. Process according to Claim 9, **characterized in that** it comprises a step of coating at least one portion of the internal surface of the tube with the gas getter.

11. Process according to Claim 9, **characterized in that** it comprises a step of inserting the gas getter into the tube.

12. Process according to any one of Claims 9 to 11, **characterized in that** the process furthermore comprises the following step:
- blocking (304) the second end (112) of the tube (11) once the pumping step has terminated.

13. Process according to Claim 12, **characterized in that** the blocking step is performed by pinching off the second end (112) of the tube (11).

14. Process according to any one of Claims 9 to 13, **characterized in that** the metal seal (1) is securely fastened by soldering to a first peripheral zone of the first glass sheet covered with a first adhesion coating (53) and to a second peripheral zone of the second glass sheet covered with a second adhesion coating (53).

15. Process according to any one of Claims 9 to 14, **characterized in that** the metal seal comprises a metal strip and **in that** the process comprises a step of drilling the strip in order to produce a hole (12) and a step of inserting the metal tube (11) into the hole (12).
